# EUROPEAN PATENT SPECIFICATION

(11) **EP 2 635 458 B1**
(45) Date of publication and mention of the grant of the patent: **13.07.2016**
(21) Application number: 11799892.2
(22) Date of filing: 16.11.2011
(51) Int. Cl.: B60R 5/04, B62D 25/08, B25H 3/02

(54) **SET OF CONTAINERS AND A METHOD OF CAR BODY REINFORCEMENT**
SATZ VON CONTAINERN UND VERFAHREN ZUR VERSTÄRKUNG EINER FAHRZEUGSTRUKTUR
ENSEMBLE DE CONTENANTS ET PROCÉDÉ DE RENFORCEMENT DE CARROSSERIE DE VOITURE

(30) Priority: 23.11.2010 PL 39302710
(43) Date of publication of application: 11.09.2013
(73) Proprietor: Langsteiner, Alicja, 33-190 Ostrusza (PL)
(72) Inventor: MIKOLAICZIK, Gerhard Michael, Röthenbach A.D. Pegnitz (DE); WÓJTOWICZ Albert Stanislaw, PL-38-300 Gorlice (PL); LANGSTEINER, Alicja, PL-33-190 Ostrusza (PL)
(74) Representative: Krekora, Magdalena
(86) International application number: PCT/PL2011/000118
(87) International publication number: WO 2012/070959

(56) References cited:
- EP-A1- 0 160 751
- DE-A1- 10 009 508
- DE-A1- 19 841 141
- DE-U1- 20 001 372
- FR-A1- 2 911 552
- JP-A- 10 029 466
- US-A- 2 497 173

## Description

### TECHNICAL FIELD

The object of the present invention is a set of containers intended for reinforcement of a car body, and a method of car body reinforcement, in particular automobiles.

### BACKGROUND ART

Most of the cars have so called crumple zones located in the front part of the car. The role of crumple zones is to absorb the kinetic energy. Their use enhances the passive safety of the car, in particular in case of front collisions. The rear part of the car is usually the weakest part of the car structure. It is particularly dangerous in case of car accidents when the rear and side-rear part of the car is hit. Empty space of the car boot is not able to absorb the energy created during collision. Additionally luggage placed in the boot may, in case of side or rear collision, act as bullets causing additional harm to passengers being in the cabin of the car.

Patent specification No. DE10009508 discloses the set of suitcases adjusted to the side walls of the boot. The suitcases being the part of the set are made of aluminum or/and plastics. The aim of this invention is to provide the adequate filling of the boot, but it has no influence with regard to safety.

Specification of utility design DE 200 01 372 U1 discloses a car with a set of containers according to claim 1 and a method of car body reinforcement according to claim 9 , wherein said set comprises containers made of materials able to transfer collision forces, when the car body is hit, where the containers are shaped in relation to each other and in relation to the surfaces limiting the car boot space in such a way that they fill this space completely.

In order to protect the passengers against side-collision or rear collision impact the car body is reinforced by use of longitudinal beams or strengthening of car body side sills. But this type of reinforcement is not completely satisfactory, and above all must constitute the element of the car body at the very beginning. So it is not possible to use such reinforcements in older car models.

### DISCLOSURE OF THE INVENTION

The idea of the invention consists in such stiffening of the rear part of the car, without reduction of its utility values, and without generating additional weight of the car body, that the car body is reinforced, what improves safety of passengers in case of rear and side car collisions.

Car with a set of containers, said set comprising containers made of materials able to transfer collision forces, when the car body is hit, where the containers are shaped in relation to each other and in relation to the surfaces limiting the car boot space in such a way that they fill this space completely, wherein the containers are suitcases, according to the invention is characterised in that the edges of side walls of upper and lower part of each suitcase being in contact with each other, when the suitcase is closed, are not parallel to the bottom of the suitcase, and as a result the hinges of the suitcase are not positioned at the same height as the closure of the suitcase. Such position of the suitcase closure in relation to the hinges results in enhancement of the surface of contact between the suitcases, and thanks to that the suitcases better adhere to each other, and better fill the space of the car boot. As the each of the containers included in the set is shaped in such a way that it fits the walls and bottom of the boot, and all the containers put together fill the space of the boot not leaving free spaces, the containers do not move in the boot, and create homogenous structure in the boot, which in case of side collision transfers forces, enabling conversion of kinetic energy into energy of rotation around the vertical axis of the vehicle (energy dissipation by tires friction forces), and in case of rear collision absorbs created kinetic energy. Therefore the choice of the materials used for making the containers is very important. The term "made of materials" means both the cases when the whole container is made of materials meeting specified resistance parameters, and the cases when the suitcase framing, i.e. the element of the suitcase determining its strength, is made of materials meeting specified resistance parameters, and the rest of elements is made of other materials usually used for making such type of containers.

Preferably the external walls of the containers are made of materials having tensile strength at the limit of plasticity equal or higher than 20 MPa.

Preferably the external walls of the containers are made of materials having compression strength at the limit of plasticity equal or higher than 65 MPa.

Preferably the external walls of the containers are made of materials having Young's module equal or higher than 1500 MPa.

Preferably the external walls of the containers have thickness equal or higher than 2mm.

Preferably the external walls of the containers are made of polycarbonate or/and polypropylene or/and Kevlar or/and ABS (acrylonitrile butadiene styrene). It is also possible to use other materials having similar resistance parameters.

Preferably the suitcases have recesses in their walls, strictly speaking these are pits enabling the suitcases to adhere closely to each other. Additionally the suitcases have biaxially hinged cover or/and flattened bottom or/and flattened cover or/and anti-skidding pads on the external wall of the bottom or/and cover. Thanks to biaxially hinged covers the suitcases adhere closely to each other. Flattened bottom or/and cover enables the suitcase to adhere closely to the bottom of the boot. Anti-skidding pads prevent the suitcases from moving inside the car boot. Additionally such shape of the suitcases enables optimal transfer of forces from one suitcase to another.

A method of car body reinforcement consisting in filling the car boot with containers, said containers made of materials able to transfer collision forces, when the car body is hit, where the containers are shaped in relation to each other and in relation to the surfaces limiting the car boot space in such a way that they fill this space completely, wherein the containers are suitcases, according to the present invention, consists in that the edges of side walls of upper and lower part of each suitcase being in contact with each other, when the suitcase is closed, are not parallel to the bottom of the suitcase, and as a result the hinges of the suitcase are not positioned at the same height as the closure of the suitcase.
The term "made of materials" means either that the whole container is made of materials meeting specified resistance parameters, or that the suitcase framing, i.e. the element of the suitcase determining its strength, is made of materials meeting specified resistance parameters, and the rest of elements is made of other materials usually used for making of such type of containers.

Preferably the containers have external walls made of materials having tensile strength at the limit of plasticity equal or higher than 20 MPa.

Preferably the containers have external walls made of materials having compression strength at the limit of plasticity equal or higher than 65 MPa.

Preferably the containers have external walls made of materials having Young's module equal or higher than 1500 MPa.

Preferably the containers have external walls having thickness equal or higher than 2mm.

Preferably the containers have external walls made of polycarbonate or/and polypropylene or/and Kevlar or/and ABS (acrylonitrile butadiene styrene). It is also possible to use other materials having similar resistance parameters.

Preferably the suitcases have recesses in their walls. Preferably the suitcases have biaxially hinged cover or/and flattened bottom or/and flattened cover or/and anti-skidding pads on the external wall of the bottom or/and cover.

Use of the invention consists in filling of the whole space of the car boot with suitcases fitting to each other, and having stiff construction, in such a way that they create a honeycomb structure. The task of this structure is to transfer forces created as a result of car collision as follows:
- in case of side rear collision (force - slantly from the front to the back) the collision will have the character close to elastic, what will result in conversion of smaller amount of kinetic energy into energy of deformation, because instead of jamming, the vehicle will rotate around its vertical axis, what in comparison to inelastic collision (bigger deformation of car body, and jamming of vehicles) will reduce the forces impacting the passengers - hitting car still conserves part of kinetic energy;
- in case of rear collision (along the roll axis of the vehicle, and at an angle to it) the collision has character of inelastic collision, and the kinetic energy to bigger extent is converted into energy of deformation of car body elements, elements that do not take part in the collision (space frame created by suitcases transfers forces to side parts of car body and to wheel arches);
- in case of front collisions all travellers' articles are in suitcases, that kept by the back rest of the back seat, and by the cover of the car boot will not fly to the front of the car, and hit the passenger.

In order to achieve desired reinforcement of the car body it is necessary to fill the space of the car boot entirely with suitcase that are shaped in such a way to fit each other, and placed in a way allowing for maximal transfer of forces by the structure of each suitcase. Therefore the suitcase must have shapes adapted to the form of the car boot. The suitcases should be made of stiff materials in order to ensure desired transfer of forces. As a result:
- the elements of luggage are used to improve the passive safety of passengers;
- additional stiffening element is introduced, being a set of suitcases;
- luggage fills the space of the car boot entirely, and as a result it may better transfer forces impacting the elements of car body;
- deflection of car body during collision is reduced thanks to enhanced stiffness of the car structure;
- the way of energy conversion from kinetic to energy of deformation is changed advantageously or the amount of kinetic energy created during collision is reduced;
- the forces impacting the passengers during the side rear collision are reduced, because the collision closer to elastic collision with centre of gravity of the car results in smaller change of velocity vector of passengers. In accordance with energy conservation law force integral (impacting passengers) is reduced over time, what means decrease of danger for health of passengers during the collision.

### BEST MODE OF CARRYING OUT THE INVENTION

The following examples illustrate the invention without setting or delineating its limits. Fig. 1, 2 and 3 illustrate the set of containers placed in the car boot, fig. 4 - the set of containers adapted to the shape of the car boot, fig. 5, 6, 7 - set of containers filling the car boot, fig. from 8 to 13 - a suitcase being a part of the set, and fig. 14 illustrates distribution of forces during collision in the car boot filled with the set of containers in accordance with the present invention.

### Example 1

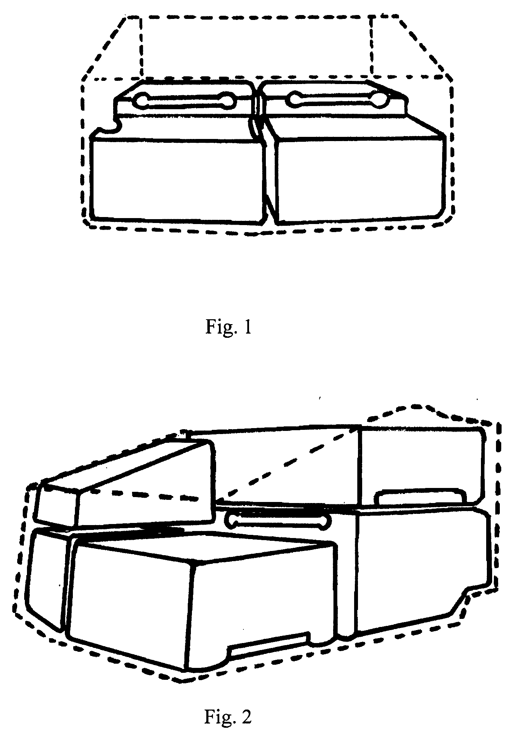

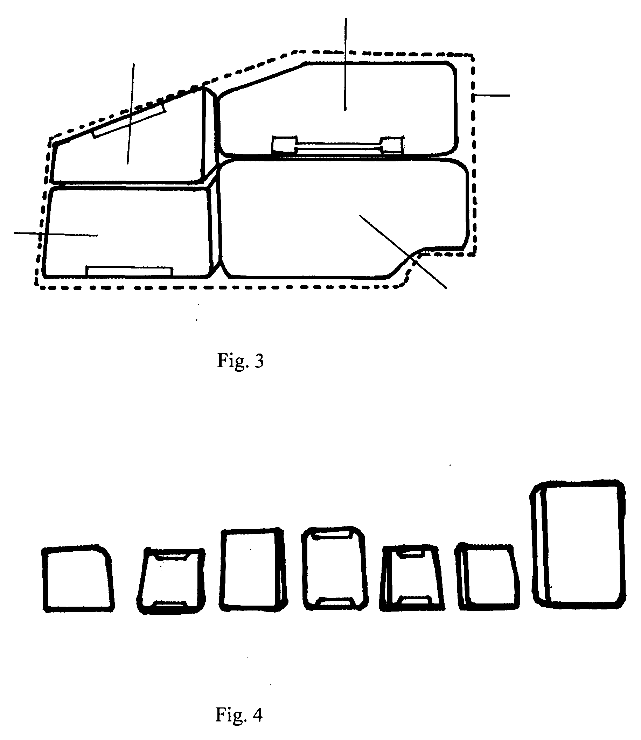

Containers 2, 3, 4 and 5 are placed in the car boot 1. The containers are adapted to the shape of side walls, and the bottom of the car boot as shown at fig. 1. Then the containers 6 and 7 adapted to the shape of the car boot walls and the shelve and cover of the car boot are placed on top, as shown at fig. 2. At the end container 8 is placed in the car boot as shown at fig. 3. All the containers filling the car boot are shaped in such a way to adhere to each other, and to adhere to the walls of the car boot, as a result the car boot is entirely filled with the containers. The set of containers is shown at 4. All containers were made of polycarbonate. Thickness of the walls of containers is 2 mm.

### Example 2

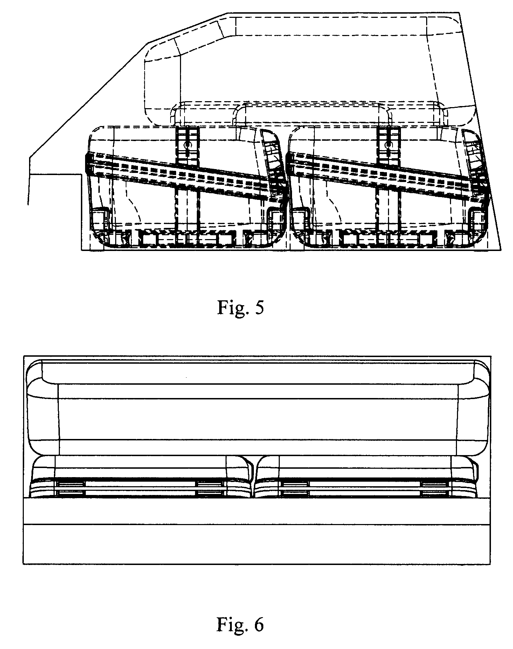

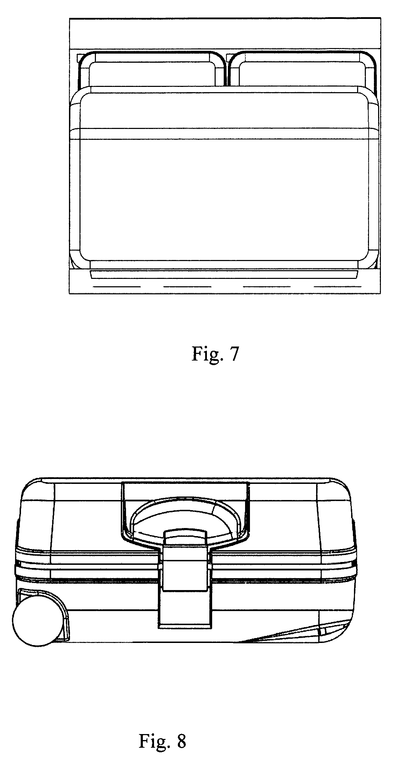

In this example the car boot is filled with suitcase, as shown at fig. 5, which shows the side view of the car boot, at fig. 6, which shows the front view of the car boot, and at fig. 7 showing the top view of the car boot.

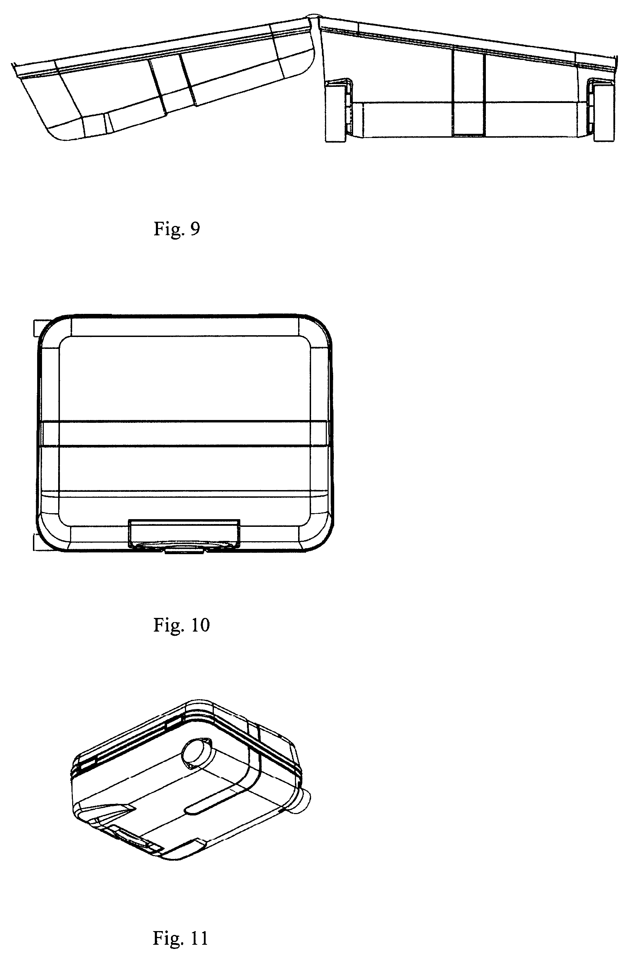

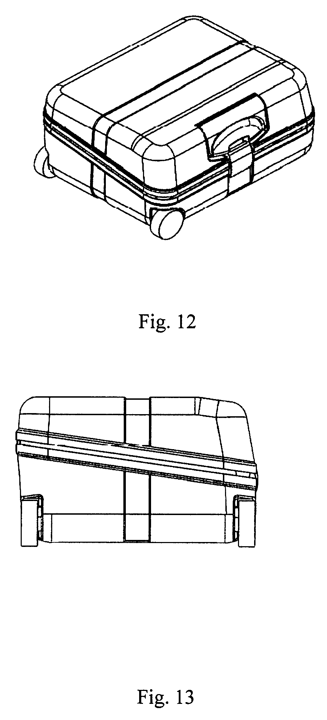

As it is shown at fig. 8, suitcase 9 has recesses 10 in its side walls enhancing the surface of contact between the suitcases. As it is shown at fig. 9 suitcase 9 has biaxial hinges 11. Additionally bottom of the suitcase 12 and cover of the suitcase 13 have flattened surfaces in order to enhance the surface contact with the bottom of the car boot. As it is shown at fig. 10 cover of the suitcase 13 has anti-skidding pad 14 made of silicon. Similarly, as shown at fig. 11, the bottom of the suitcase 12 has anti-skidding pad 14 made of silicon. As it is shown at fig. 12 and fig. 13, the surface of contact between the upper and the lower part of the suitcase 15 are position at acute angle in relation to the bottom of the suitcase 12, and as a result the hinges of the suitcase 11 are not positioned at the same height with the closure of the suitcase 16. The suitcase are made of polycarbonate. Thickness of the walls of suitcases is 4 mm.

In order to confirm the effectiveness of the invention the tests were carried out. The containers used during the tests were made of polycarbonate, and the thickness of their walls was 4 mm. The containers were adapted to the shape of the car boot and were adhering to each other.

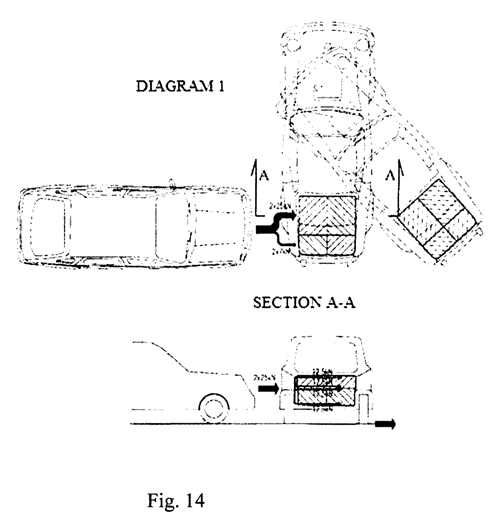

Fig. 14 shows the situation when the car is hit in the car boot perpendicularly to the roll axis of the car. The car is moving or parking. The forces illustrated at the fig. 14 are terminal forces that may be transferred by the set of the containers. In case of the collision with the car having average mass, moving with the speed of 60km/h, the active force will be much higher than the total resistance of the containers. Part of the energy created during the collision will be initially absorbed by the car body, which after deformation at the side of the collision will transfer forces on the set of containers. Stiffness of the containers together with the adhering to them construction of the car boot will transfer the energy to the rear axis of the vehicle, and will cause its rotation. Rotation of the vehicle takes place at the moment when the forces of adhesion between the tires and the pavement are exceeded. The size of the force depends on the mass of the vehicle, the kind, and the humidity of the pavement, and on the fact whether the vehicle is moving or being standstill. The vehicle having weight per axle of 800kg, being standstill needs horizontal force per axle of 1,6kN - 6,5kN to loss of adherence and start of rotation, depending on the kind of pavement (asphalt, concrete) and its humidity (wet, dry). These are the forces significantly lower than the forces transferred by the containers. The stiffness of containers and their co-operation with elements of car body - by rotation of the vehicle - allows for significant reduction of the effects of the collision both for the passengers and the vehicle.

## Claims

1. Car with a set of containers, said set comprising containers made of materials able to transfer collision forces, when the car body is hit, where the containers are shaped in relation to each other and in relation to the surfaces limiting the car boot space in such a way that they fill this space completely, wherein the containers are suitcases, **characterised in that** the edges of side walls of upper and lower part of each suitcase (15) being in contact with each other, when the suitcase is closed, are not parallel to the bottom of the suitcase, and as a result the hinges of the suitcase (11) are not positioned at the same height as the closure of the suitcase (16).

2. The car according to claim 1, **characterised in that**, the external walls of the containers are made of materials having tensile strength at the limit of plasticity equal or higher than 20 MPa.

3. The car according to any of the preceding claims, **characterised in that** the external walls of the containers are made of materials having compression strength at the limit of plasticity equal or higher than 65 MPa.

4. The car according to any of the preceding claims, **characterised in that** the external walls of the containers are made of materials having Young's module equal or higher than 1500 MPa.

5. The car according to any of the preceding claims, **characterised in that** the external walls of the containers have thickness equal or higher than 2mm.

6. The car according to claim 1, **characterised in that**, the external walls of the containers are made of polycarbonate or/and polypropylene or/and Kevlar or/and ABS (acrylonitrile butadiene styrene).

7. The car according to any of the preceding claims, **characterised in that** the suitcases have recesses in their walls (10).

8. The car according to any of the preceding claims, **characterised in that** the suitcases have biaxially hinged cover (11) or/and flattened bottom or/and flattened cover or/and anti-skidding pads (14) on the external wall of the bottom or/and cover.

9. A method of car body reinforcement consisting in filling the car boot with containers, said containers made of materials able to transfer collision forces, when the car body is hit, where the containers are shaped in relation to each other and in relation to the surfaces limiting the car boot space in such a way that they fill this space completely, wherein the containers are suitcases, **characterised in that** the edges of side walls of upper and lower part of each suitcase (15) being in contact with each other, when the suitcase is closed, are not parallel to the bottom of the suitcase, and as a result the hinges of the suitcase (11) are not positioned at the same height as the closure of the suitcase (16).

10. The method according to claim 9, **characterised in that** the containers have external walls made of materials having tensile strength at the limit of plasticity equal or higher than 20 MPa.

11. The method according to claim 9 or 10, **characterised in that** the containers have external walls made of materials having compression strength at the limit of plasticity equal or higher than 65 MPa.

12. The method according to any of the claims from 9 to 11, **characterised in that** the containers have external walls made of materials having Young's module equal or higher than 1500 MPa.

13. The method according to any of the claims from 9 to 12, **characterised in that** the containers have external walls having thickness equal or higher than 2mm.

14. The method according to claim 10, **characterised in that** the containers have external walls made of polycarbonate or/and polypropylene or/and Kevlar or/and ABS (acrylonitrile butadiene styrene).

15. The method according to claims from 9 to 14, **characterised in that** the suitcases have recesses in their walls (10).

16. The method according to claims from 9 to 15, **characterised in that** the suitcases have biaxially hinged cover (11) or/and flattened bottom or/and flattened cover or/and anti-skidding pads (14) on the external wall of the bottom or/and cover.

## Patentansprüche

1. Ein Auto mit einem Satz von Behältern; der gegenständliche Satz umfasst Behälter aus Materialien, die eine Übertragung der Kollisionskräfte ermöglichen, wenn gegen den Fahrzeugaufbau gestoßen wird, wo die Behälter sich gegenüber und gegenüber den Flächen, die den Kofferraum des Autos beschränken, so gestaltet sind, dass die Fläche mit den Behältern vollständig ausgefüllt ist, wobei die Behälter Koffer sind, **dadurch gekennzeichnet, dass** die Kanten der Seitenwände des oberen und unteren Teiles des Koffers (15), die gegenseitig in Kontakt sind, wenn der Koffer zu ist, zu dem Boden des Koffers nicht parallel sind, und dadurch sind Scharniere des Koffers (11) nicht auf der gleichen Höhe wie das Schloss des Koffers (16) platziert.

2. Auto nach Anspruch 1, **dadurch gekennzeichnet, dass** die Außenwände der Behälter aus Materialien mit der Zugfestigkeit an der Steckgrenze ausgeführt sind, die gleich oder höher von 20 MPa ist.

3. Auto nach irgendeinem der vorherigen Ansprüche, **dadurch gekennzeichnet, dass** die Außenwände der Behälter aus Materialien mit der Druckfestigkeit an der Steckgrenze ausgeführt sind, die gleich oder höher von 65 MPa ist.

4. Auto nach irgendeinem der vorherigen Ansprüche, **dadurch gekennzeichnet, dass** die Außenwände der Behälter aus Materialien mit dem Elastizitätsmodul gleich oder höher von 1500 MPa ausgeführt sind.

5. Auto nach irgendeinem der vorherigen Ansprüche, **dadurch gekennzeichnet, dass** die Außenwände der Behälter die Stärke von 2 mm oder mehr haben.

6. Auto nach Anspruch 1, **dadurch gekennzeichnet, dass** die Außenwände der Behälter aus Polycarbonat oder/und Polypropylen oder/und Kevlar oder/und ABS (Acrylnitril-Butadien-Styrol) ausgeführt sind.

7. Auto nach irgendeinem der vorherigen Ansprüche, **dadurch gekennzeichnet, dass** die Koffer Vertiefungen in den Wänden haben (10).

8. Auto nach irgendeinem der vorherigen Ansprüche, **dadurch gekennzeichnet, dass** die Koffer den Deckel mit zweiachsigen Scharnieren (11) oder/und einen abgeflachten Boden oder/und einen abgeflachten Deckel oder/und Anti-Rutsch-Pads (14) auf den Außenwänden des Bodens oder/und des Deckels haben.

9. Verstärkungsweise des Aufbaus des Autos, die darauf beruht, dass der Kofferraum des Autos mit Behältern ausgefüllt ist; gegenständliche Behälter sind aus Materialien ausgeführt, die eine Übertragung der Kollisionskräfte ermöglichen, wenn gegen den Fahrzeugaufbau gestoßen wird, wo die Behälter sich gegenüber und gegenüber den Flächen, die den Kofferraum des Autos beschränken, so gestaltet sind, dass die Fläche mit den Behältern vollständig ausgefüllt ist, wobei die Behälter Koffer sind, **dadurch gekennzeichnet, dass** die Kanten der Seitenwände des oberen und unteren Teiles des Koffers (15), die gegenseitig in Kontakt sind, wenn der Koffer zu ist, zu dem Boden des Koffers nicht parallel sind, und dadurch sind Scharniere des Koffers (11) nicht auf der gleichen Höhe wie das Schloss des Koffers (16) platziert.

10. Verstärkungsweise nach Anspruch 9, **dadurch gekennzeichnet, dass** die Außenwände der Behälter aus Materialien mit der Zugfestigkeit an der Steckgrenze ausgeführt sind, die gleich oder höher von 20 MPa ist.

11. Verstärkungsweise nach Anspruch 9 oder 10, **dadurch gekennzeichnet, dass** die Außenwände der Behälter aus Materialien mit der Druckfestigkeit an der Steckgrenze ausgeführt sind, die gleich oder höher von 65 MPa ist.

12. Verstärkungsweise nach irgendeinem der Ansprüche von 9 bis 11, **dadurch gekennzeichnet, dass** die Außenwände der Behälter aus Materialien mit dem Elastizitätsmodul gleich oder höher von 1500 MPa ausgeführt sind.

13. Verstärkungsweise nach irgendeinem der Ansprüche von 9 bis 12, **dadurch gekennzeichnet, dass** die Außenwände der Behälter die Stärke von 2 mm oder mehr haben.

14. Verstärkungsweise nach Anspruch 10, **dadurch gekennzeichnet, dass** die Außenwände der Behälter aus Polycarbonat oder/und Polypropylen oder/und Kevlar oder/und ABS (Acrylnitril-Butadien-Styrol) ausgeführt sind.

15. Verstärkungsweise nach den Ansprüchen von 9 bis 14, **dadurch gekennzeichnet, dass** die Koffer Vertiefungen in den Wänden haben (10).

16. Verstärkungsweise nach den Ansprüchen von 9 bis 15, **dadurch gekennzeichnet, dass** die Koffer den Deckel mit zweiachsigen Scharnieren (11) oder/und einen abgeflachten Boden oder/und einen abgeflachten Deckel oder/und Anti-Rutsch-Pads (14) auf den Außenwänden des Bodens oder/und des Deckels haben.

## Revendications

1. La voiture avec un jeu de conteneurs ; ledit jeu est composé de matériaux capables de transférer les forces de collision quand la carrosserie est frappée ; ces conteneurs ont une forme adaptée l'un par rapport à l'autre ainsi que par rapport aux surfaces limitant l'espace du coffre de la voiture de manière qu'ils le remplissent complètement ; lesdits conteneurs existent sous forme de valises, **caractérisée en ce que** les bords des parois latérales de la partie supérieure et de la partie inférieure de chacune valise (15), qui sont en contact l'un avec l'autre quand la valise est fermée, ne sont pas parallèles au fond de la valise et par conséquent, les charnières de la valise (11) ne sont pas positionnées à la même hauteur que la fermeture de la valise (16).

2. La voiture, selon la revendication 1, **caractérisée en ce que** les parois extérieures des conteneurs sont composés de matériaux qui présentent la résistance à la traction ayant la limite de la plasticité égale ou supérieure à 20 MPa.

3. La voiture, selon l'une quelconque des revendications précédentes, **caractérisée en ce que** les parois extérieures des conteneurs sont composés de matériaux ayant la force de compression à la limite de la plasticité égale ou supérieure à 65 MPa.

4. La voiture, selon l'une quelconque des revendications précédentes, **caractérisée en ce que** les parois extérieures des conteneurs sont composés de matériaux ayant le module de Young égal ou supérieur à 1500 MPa.

5. La voiture, selon l'une quelconque des revendications précédentes, **caractérisée en ce que** les parois extérieures des conteneurs ont une épaisseur égale ou supérieure à 2mm.

6. La voiture, selon la revendication 1, **caractérisée en ce que** les parois extérieures des conteneurs sont composés du polycarbonate ou/et du polypropylène ou/et du kevlar ou/et de l'ABS (acrylonitrile butadiène styrène).

7. La voiture, selon l'une quelconque des revendications précédentes, **caractérisée en ce que** les valises ont des recoins dans leurs parois (10).

8. La voiture selon l'une quelconque des revendications précédentes, **caractérisée en ce que** les valises ont un couvercle à charnière biaxialement orientée (11) ou/et un fond aplati ou/et un couvercle aplati ou/et des rembourrages antidérapants (14) situés à la paroi extérieure du fond ou/et du couvercle.

9. La méthode du renforcement de la carrosserie consiste à remplir le coffre de la voiture avec des conteneurs ; lesdits conteneurs sont composés de matériaux capables de transférer les forces de collision quand la carrosserie est frappée ; ces conteneurs ont une forme adaptée l'un par rapport à l'autre ainsi que par rapport aux surfaces limitant l'espace du coffre de la voiture de manière qu'ils le remplissent complètement ; lesdits conteneurs existent sous forme de valises, **caractérisée en ce que** les bords des parois latérales de la partie supérieure et de la partie inférieure de chacune valise (15), qui sont en contact l'un avec l'autre quand la valise est fermée, ne sont pas parallèles au fond de la valise et par conséquent, les charnières de la valise (11) ne sont pas positionnées à la même hauteur que la fermeture de la valise (16).

10. La méthode selon la revendication 9, **caractérisée en ce que** les parois extérieures des conteneurs sont composés de matériaux qui présentent la résistance à la traction ayant la limite de la plasticité égale ou supérieure à 20 MPa.

11. La méthode selon la revendication 9 ou la revendication 10, **caractérisée en ce que** les parois extérieures des conteneurs sont composés de matériaux ayant la force de compression à la limite de la plasticité égale ou supérieure à 65 MPa.

12. La méthode selon l'une quelconque des revendications de 9 à 11, **caractérisée en ce que** les parois extérieures des conteneurs sont composés de matériaux ayant le module de Young égal ou supérieur à 1500 MPa.

13. La méthode selon l'une quelconque des revendications de 9 à 12, **caractérisée en ce que** les parois extérieures des conteneurs ont une épaisseur égale ou supérieure à 2mm.

14. La méthode selon la revendication 10, **caractérisée en ce que** les parois extérieures des conteneurs sont composés du polycarbonate ou/et du polypropylène ou/et du kevlar ou/et de l'ABS (acrylonitrile butadiène styrène).

15. La méthode selon l'une quelconque des revendications de 9 à 14, **caractérisée en ce que** les valises ont des recoins dans leurs parois (10).

16. La méthode selon l'une quelconque des revendications de 9 à 15, **caractérisée en ce que** les valises ont un couvercle à charnière biaxialement orientée (11) ou/et un fond aplati ou/et un couvercle aplati ou/et des rembourrages antidérapants (14) situés à la parois extérieure du fond ou/et du couvercle.
